# FASCICULE DE BREVET EUROPEEN

(11) **EP 0 575 241 B1**
(45) Date de publication et mention de la délivrance du brevet: **21.08.1996**
(21) Numéro de dépôt: 93401529.8
(22) Date de dépôt: 15.06.1993
(51) Int. Cl.: B60S 1/34

(54) **Dispositif d'essuie-glace à liaison esthétique entre le carter et la tête d'entraînement**
Gelenkverbindung zwischen dem gehäuseartigen Gelenkteil und dem Befestigungsteil eines Scheibenwischers
Connection between the housing-like arm linking portion and mounting head of a windscreen wiper arrangement

(30) Priorité: 16.06.1992 FR 9207270
(43) Date de publication de la demande: 22.12.1993
(73) Titulaire: VALEO SYSTEMES D'ESSUYAGE, 78321 La Verrière (FR)
(72) Inventeur: Eustache, Jean-Pierre, F-92160 Antony (FR)
(74) Mandataire: Martin, Jean-Jacques

(56) Documents cités:
- DE-A- 2 052 354
- FR-A- 1 586 569
- GB-A- 935 168
- GB-A- 953 850
- GB-A- 2 207 342
- US-A- 3 265 415

## Description

La présente invention concerne le domaine des dispositifs d'essuie-glace, et plus particulièrement les dispositifs d'essuie-glace destinés à l'essuyage d'un pare-brise de véhicule automobile.

Il est connu des dispositifs d'essuie-glace qui comprennent une tête d'entraînement apte à être couplée en rotation avec un arbre d'entraînement et un bras d'essuie-glace comprenant un carter, articulé par une extrémité sur ladite tête d'entraînement autour d'un axe de débattement s'étendant transversalement audit arbre d'entraînement, prolongé à l'autre extrémité par une tige porte-balai engagée dans le carter et portant un balai d'essuyage adapté à venir au contact d'une surface à essuyer.

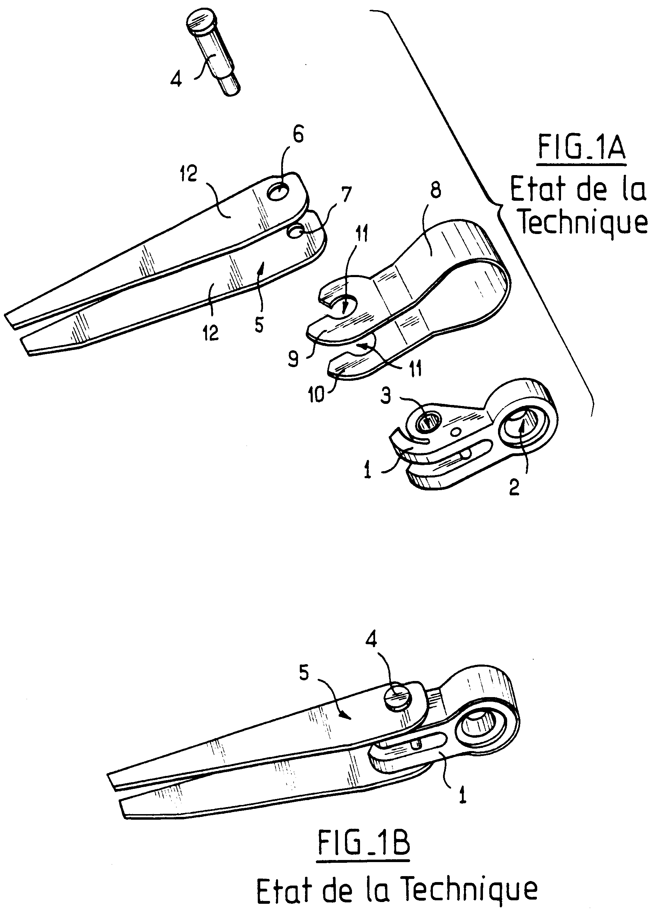

On a représenté sur les figures 1A et 1B illustrant l'état de la technique sur lequel repose l'invention, respectivement en vue éclatée et assemblée, les différents éléments constitutifs d'un dispositif d'essuie-glace connu au niveau de la liaison entre le carter et la tête d'entraînement. On aperçoit sur la figure 1A une tête d'entraînement 1, comprenant un premier alésage 2 destiné à recevoir un arbre d'entraînement non représenté et un deuxième alésage 3, d'axe perpendiculaire au premier, destiné à recevoir un rivet 4 servant de pivot à l'articulation sur la tête d'entraînement 1 d'un carter 5 partiellement représenté. Le carter 5 présente une section transversale ayant généralement la forme d'un U retourné, comprenant deux ailes latérales 12 raccordées à un dos. Deux perçages 6 et 7 sont prévus dans les ailes latérales 12 en regard l'un de l'autre pour recevoir le rivet 4.

Pour des raisons essentiellement esthétiques, un capuchon 8 en matière plastique coiffe la tête d'entraînement 1, ce capuchon 8 étant mis en place sur la tête d'entraînement lors de l'assemblage du carter 5 sur la tête d'entraînement 1, et comprend deux pattes 9 et 10 disposées à l'intérieur du carter, munies chacune d'une ouverture 11 destinée au passage du rivet 4. Le capuchon 8 est ainsi retenu sur la tête d'entraînement 1 grâce aux pattes 9 et 10 lors du rivetage du carter 5 sur la tête 1. Lors de cette opération de rivetage, les pattes 9 et 10, en matière plastique, et donc relativement fragiles, risquent d'être endommagées si les ouvertures 11 sont mal positionnées en regard des perçages 6 et 7 du carter, par pinçage entre les ai les latérales 12 du carter et le corps de la tête d'entraînement 1.

Par ailleurs, on remarque à l'examen de la figure 1B, qu'après assemblage, la tête du rivet 4 fait saillie sur la surface externe du carter 5. Or, la tendance actuelle dans les véhicules automobiles modernes est de rechercher des lignes de carrosserie ou d'accessoires les plus lisses possibles, et la Demanderesse a constaté que les bras d'essuie-glace connus, avec les têtes des rivets en saillie sur la surface externe du carter vont à l'encontre de cette tendance. De plus, cette partie saillante est soumise à des agressions extérieures, telles qu'une oxydation par exemple, qui peut entraîner une fragilisation de la tête de rivet.

Le document US-A-3 265 415 décrit un carter d'essuie-glace articulé sur une tête d'entraînement par un axe dont chaque extrémité est munie d'un épaulement, de diamètre réduit, sur lesquels le carter, souple, vient s'enclipser lors du montage, les extrémités de l'axe faisant légèrement saillie des trous du carter.

La présente invention a pour objet un dispositif d'essuie-glace amélioré, remédiant aux inconvénients précites.

La présente invention propose pour cela, et selon l'invention un dispositif d'essuie-glace comprenant une tête d'entraînement apte à être entraînée en rotation autour d'un axe d'entraînement, un carter articulé à une extrémité sur ladite tête d'entraînement autour d'un axe de débattement s'étendant transversalement audit axe d'entraînement, une tige porte-balai engagée à une extrémité dans le carter et apte à recevoir par l'extrémité opposée un balai d'essuyage destiné a venir au contact d'une surface à essuyer, la tête d'entraînement comprenant un alésage dans lequel est engagé un arbre servant de pivot à l'articulation entre le carter et la tête d'entraînement, ledit arbre étant constitué d'au, moins un élément cylindrique, et les extrémités extérieures de l'arbre étant retenues à force, dans des perçages correspondants prévus en regard dudit alésage sur le carter, (Dispositif du type selon US-A-3 265 415), caractérisé par le fait que l'une au moins desdites extrémités extérieures est moletée sur sa périphérie et en ce que les faces d'extrémité de l'arbre sont situées en retrait ou à affleurement de la surface externe du carter bordant lesdits perçages.

Différents modes de réalisation sont précisés dans les revendications dépendantes 2 à 4.

D'autres caractéristiques et avantages de l'invention apparaîtront à la lecture de la description d'exemples de réalisation non limitatifs de l'invention qui va suivre et à l'examen du dessin annexé sur lequel :
- les figures 1A et 1B, précédemment décrites, illustrent l'état de la technique sur lequel repose, l'invention,
- la figure 2 est une vue en perspective, schématique, d'une tête d'entraînement connue en elle-même,
- la figure 2A est une vue en perspective, partielle, d'un carter de bras d'essuie-glace,
- la figure 3 est une section transversale prise dans un plan contenant l'axe de débattement et s'étendant parallèlement à l'axe d'entraînement d'un premier mode de réalisation de l'invention,
- la figure 4 est une section transversale prise dans un plan contenant l'axe de débattement et s'étendant parallèlement à l'axe d'entraînement d'un deuxième mode de réalisation de l'invention,
- la figure 5 est une section transversale prise dans un plan contenant l'axe de débattement s'étendant parallèlement à l'axe d'entraînement d'une variante de réalisation du premier mode de réalisation de l'invention,
- les figures 6, 7, 8 sont des sections longitudinales de l'arbre servant de pivot à l'articulation du carter sur la tête d'entraînement, dans les modes de réalisation correspondant respectivement aux figures 3, 4, et 5.

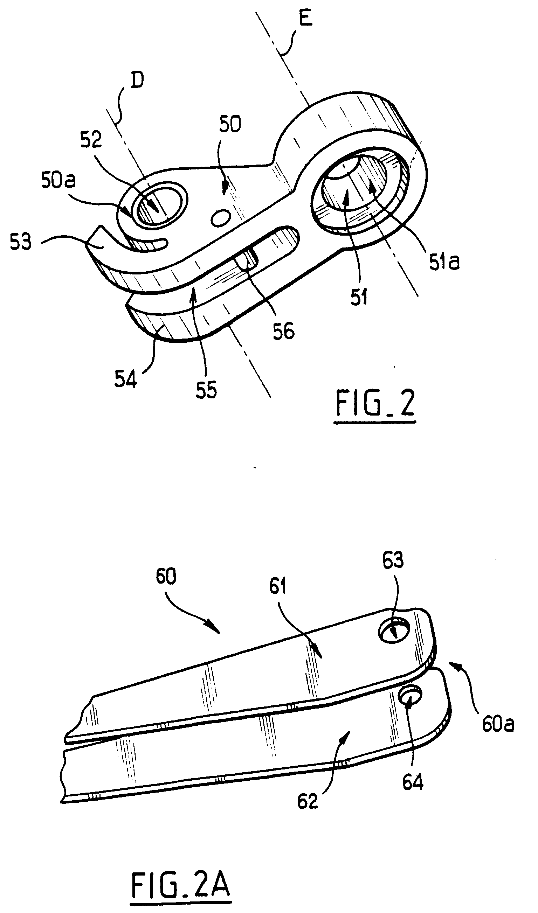

On a représenté en perspective sur la figure 2 une tête d'entraînement 50 connue en elle-même. La tête d'entraînement 50 comporte deux alésages s'étendant selon des axes perpendiculaires entre eux, dont un alésage 51 centré sur un axe d'entraînement E du dispositif d'essuie-glace et un alésage 52 s'étendant selon un axe de débattement D perpendiculaire à l'axe d'entraînement E. L'alésage 51 qui présente une portée conique est destiné à recevoir par son ouverture inférieure 51a un arbre d'entraînement de l'essuie-glace non représenté, cet arbre d'entraînement étant muni à son extrémité libre dépassant hors de l'alésage 51, à l'opposé de l'ouverture inférieure 51a, d'une surface filetée apte à recevoir un écrou de serrage de l'arbre d'entraînement sur la tête d'entraînement, de sorte que la tête d'entraînement est couplée audit arbre d'entraînement sans pouvoir tourner par rapport à celui-ci. La tête d'entraînement 50 se prolonge latéralement par rapport à l'axe d'entraînement E par une partie d'articulation 50a traversée par l'alésage 52, qui sert de palier à l'articulation d'un bras d'essuie-glace, non représenté, et qui comprend un balai apte à venir au contact d'une surface à essuyer.

Cette partie d'articulation 50a est bordée inférieurement par deux flasques 53 et 54 s'étendant transversalement à l'axe d'entraînement E, dont les faces intérieures en regard délimitent une fente 55 servant au passage du crochet d'extrémité d'un ressort de pression de contact agissant entre la tête d'entraînement et le bras de l'essuie-glace en vue de presser le balai au contact de la surface à essuyer. Ce ressort de pression de contact connu en lui-même, et donc non représenté, s'accroche sur la tête d'entraînement au moyen d'une tige d'accrochage 56 s'étendant transversalement dans la fente 55 entre les deux flasques 53 et 54.

Un carter 60 représenté partiellement en perspective de façon schématique sur la figure 2A s'articule à une première extrémité 60a sur la tête d'entraînement 50, et présente, de façon connue en soi, une section transversale ayant globalement la forme d'un U retourné, comprenant deux ailes latérales 61 et 62 raccordées à un angle droit à un dos. Les ailes latérales 61 et 62 sont munies, au niveau de la première extrémité 60a du carter 60, de perçages 63 et 64 en vis-à-vis l'un de l'autre, disposés, lors du montage du carter 60 sur la tête d'entraînement 50, en regard des ouvertures cylindriques de l'alésage 52, et dans lesquels un arbre d'entraînement non représenté est engagé, comme cela sera précisé dans la suite.

Le carter 60 porte à son extrémité opposée à l'extrémité 60a une tige porte-balai engagée dans le carter et connue en elle-même, donc non représentée, cette tige porte-balai étant apte à recevoir par son extrémité opposée à celle engagée dans le carter, le balai précité.

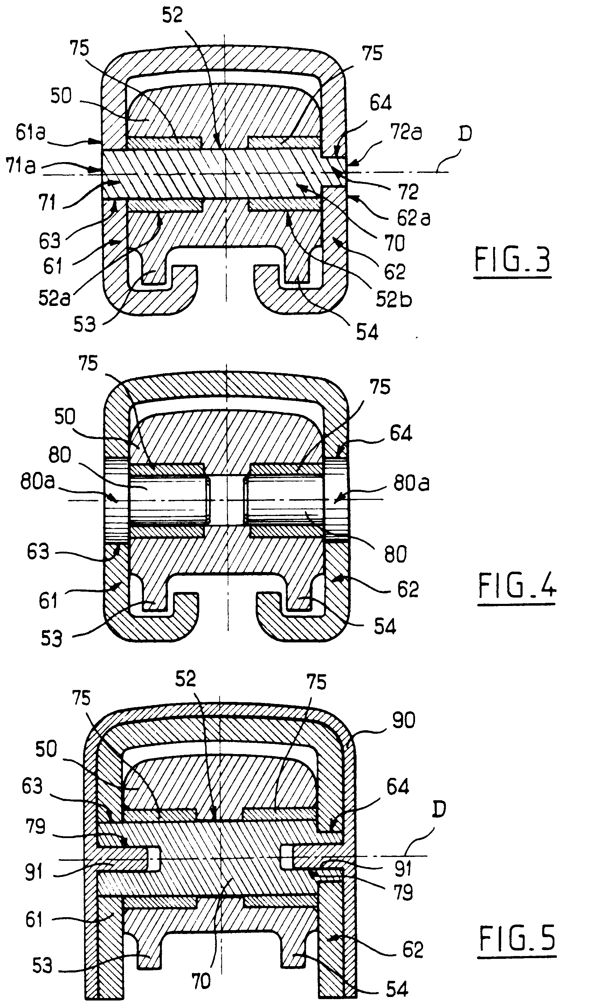

Si l'on se reporte maintenant à la figure 3 qui est une section transversale de la tête d'entraînement et de l'extrémité 60a du carter 60 articulée sur celle-ci, dans un plan contenant l'axe de débattement D et s'étendant parallèlement à l'axe d'entraînement E on remarque, conformément à une caractéristique de l'invention, que l'arbre servant de pivot à l'articulation du carter sur la tête d'entraînement est constitué d'au moins un élément cylindrique 70, ce dernier possédant des extrémités axiales extérieures 71 et 72 retenues dans les perçages correspondants 63 et 64 prévus sur les ailes latérales 61 et 62 du carter 60 en regard des ouvertures cylindriques de l'alésage 52, et dont les faces d'extrémités 71a et 72a sont situées en retrait ou affleurement de la surface externe 61a et 62a du carter 60 bordant lesdits perçages 63 et 64.

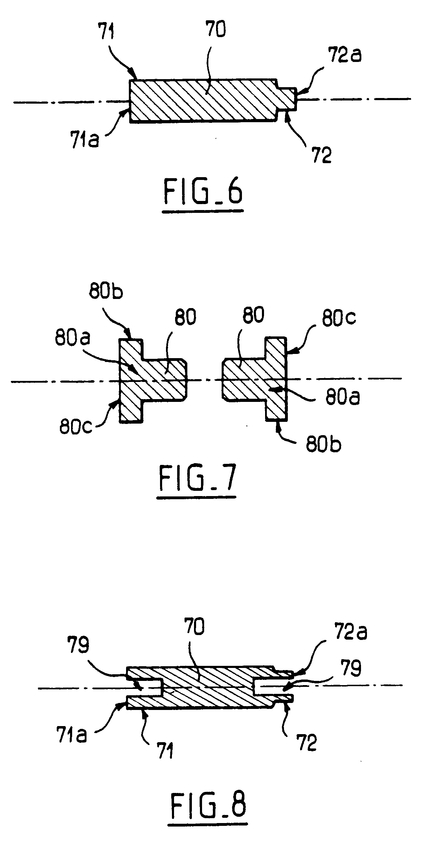

Si l'on se reporte maintenant à la figure 6 qui montre l'arbre 70 isolément, on remarque que cet arbre 70 est constitué par un corps cylindrique présentant à l'extrémité axiale 72 un rétrécissement de diamètre, et à l'extrémité axiale 71 opposée un diamètre supérieur ou égal au diamètre du corps. Les perçages 63 et 64 prévus sur les ailes latérales 61 et 62 du carter ont des diamètres qui sont respectivement légèrement inférieurs aux diamètres des extrémités axiales 71 et 72 de l'arbre 70 de sorte que l'arbre 70 est apte à être introduit par son extrémité 72 dans le perçage de plus grand diamètre 63 et dans l'alésage 52 jusqu'à ce que l'extrémité 72 de l'arbre s'engage à force dans le perçage de plus petit diamètre 64, ou bien que l'extrémité 71 s'engage à force dans le perçage 63, ou bien les deux. Les extrémités axiales 71 et 72 de l'arbre 70 sont moletées sur un secteur axial s'étendant de préférence sur une distance égale à l'épaisseur des ailes latérales 61 et 62 en vue d'obtenir un bon assemblage entre ces extrémités 71 et 72 et la surface interne des perçages 63 et 64. L'arbre 70 est ainsi rigidement lié au carter 60, sans possibilité de déplacement axial en translation selon l'axe de débattement D ou de mouvement relatif en rotation par rapport au carter autour de ce même axe D.

On remarquera à l'examen de la figure 3, que l'alésage 52 présente des ouvertures cylindriques 52a et 52b élargies, en vue de loger dans chacune de ces ouvertures élargies une douille cylindrique 75 servant de palier de pivotement à l'arbre 70. On remarquera également à l'examen de la figure 3 que le bord libre inférieur des ailes latérales 61 et 62 du carter est avantageusement recourbé intérieurement pour couvrir les flasques 53 et 54 de la tête d'entraînement 50, éliminant ainsi les risques d'ouverture des ailes latérales 61 et 62 du carter 60.

Conformément à une caractéristique de l'invention, les faces d'extrémités 71a et 72a de l'arbre 70 se situent dans le prolongement de la surface extérieure du carter, de sorte que l'on obtient une surface externe parfaitement lisse, donc très esthétique, et la liaison entre le carter et la tête d'entraînement n'a pas à être couverte par un capuchon en matière plastique habituellement prévu sur les dispositifs connus de l'art antérieur.

Si l'on se reporte maintenant à la figure 4, on remarque que, conformément à un deuxième mode de réalisation de l'invention et selon une caractéristique avantageuse de celle-ci, l'arbre cylindrique est constitué par deux éléments cylindriques 80 présentant à une extrémité axiale 80a un élargissement de diamètre. Ces éléments 80 sont engagés chacun dans une ouverture cylindrique de l'alésage 52 et sont retenus à force dans les perçages 63 et 64 dont le diamètre interne est légèrement inférieur au diamètre des portions élargies 80a de ces deux éléments 80. De préférence, ces deux éléments 80, représentés en section sur la figure 7, présentent une surface externe 80b moletée sur la périphérie de leur portion élargie 80a, qui s'étend longitudinalement sur une longueur égale à l'épaisseur des ailes 61 et 62 du carter 60.

Les faces d'extrémité des portions élargies 80a sont référencées 80c.

Conformément à un mode de réalisation avantageux de l'invention, les faces d'extrémité de l'arbre servant de pivot à l'articulation du carter sur la tête d'entraînement présentent des logements aptes à recevoir en engagement des tétons de forme complémentaire, formés sur la surface interne d'un capuchon venant coiffer en position de travail du dispositif d'essuie-glace la tête d'entraînement et l'extrémité du carter articulée sur celle-ci.

En se reportant à la figure 5, on peut voir une variante de réalisation du premier mode de réalisation de l'invention, variante pour laquelle on a utilisé les mêmes références numériques que celles de la figure 3 pour désigner des éléments semblables, dont la description n'est pas reprise.

On aperçoit sur la figure 5 un capuchon 90, généralement en matière plastique, coiffant la tête d'entraînement 50, ce capuchon 90 étant muni, sur sa surface interne, de deux tétons 91 disposés en regard l'un de l'autre, engagés dans des logements cylindriques 79 centrés sur l'axe de débattement D et débouchant respectivement sur les faces d'extrémités 71a et 72a.

Le capuchon 90 est ainsi lié de façon amovible et pivotante autour de l'axe de débattement D, la mise en place ou le retrait du capuchon 90 se faisant par écartement élastique des parois latérales opposées du capuchon 90 portant les tétons 91. L'arbre 70 muni des logements 79 est représenté isolément en section longitudinale sur la figure 8.

De préférence, la section transversale du carter 60 présente un rétrécissement au niveau de l'extrémité du carter articulée sur la tête d'entraînement, de façon à ménager autour de cette extrémité un dégagement susceptible d'être recouvert par la paroi du capuchon, de sorte que la surface externe du capuchon se situe dans le prolongement de la surface externe du carter, avec l'avantage par rapport aux dispositifs d'essuie-glace connus de présenter une liaison plus esthétique et de réduire les risques de corrosion, en abritant en totalité les éléments d'articulation du carter sur la tête d'entraînement.

## Revendications

1. Dispositif d'essuie-glace comprenant une tête d'entraînement (50) apte à être entraînée en rotation autour d'un axe d'entraînement (E), un carter (60) articulé à une extrémité (60a) sur ladite tête d'entraînement autour d'un axe de débattement (D) s'étendant transversalement audit axe d'entraînement, une tige porte-balai engagée à une extrémité dans le carter et apte à recevoir par l'extrémité opposée un balai d'essuyage destiné à venir au contact d'une surface à essuyer, la tête d'entraînement comprenant un alésage (52) dans lequel est engagé un arbre (70 ; 80) servant de pivot à l'articulation entre le carter et la tête d'entraînement, ledit arbre étant constitué d'au moins un élément cylindrique et les extrémités extérieures (71, 72 ; 80a) de l'arbre étant retenues à force dans des perçages corespondants (63, 64) prévus en regard dudit alésage sur le carter, caractérisé en ce que l'une au moins desdites extrémités extérieures est moletée sur sa périphérie et en ce que les faces d'extrémité (71a, 72a ; 80c) de l'arbre sont situées en retrait ou à affleurement de la surface externe du carter (61a, 62a) bordant lesdits perçages.

2. Dispositif d'essuie-glace selon la revendication 1, caractérisé en ce que l'arbre est constitué par un unique élément cylindrique constitué par un corps cylindrique présentant à une extrémité axiale (72) extérieure un rétrécissement de diamètre, et à l'extrémité axiale extérieure opposée (71) un diamètre supérieur ou égal au diamètre dudit corps cylindrique.

3. Dispositif d'essuie-glace selon la revendication 1, caractérisé en ce que l'arbre est constitue par deux éléments cylindriques (80), lesdits éléments présentant à une extrémité axiale extérieure (80a) un élargissement de diamètre.

4. Dispositif d'essuie-glace selon l'une des revendications 1 à 3, caractérisé en ce que des logements (79) sont formés dans les faces d'extrémités et sont aptes à recevoir en engagement des tétons (91) de forme complémentaire, formés sur la surface interne d'un capuchon (90) venant coiffer la tête d'entraînement et l'extrémité (60a) du carter articulée sur celle-ci.

## Claims

1. Windscreen wiper device comprising a drive head (50) suitable for being rotated about a drive axis (E), a shell (60) pivoted at one end (60a) on the said drive head about a deflection axis (D) lying transversely to the said drive axis, a wiper arm engaged at one end in the shell and able to receive, through the opposite end, a wiper blade designed to come into contact with a surface to be wiped, the drive head comprising a bore (52) in which there is engaged a shaft (70; 80) serving as an articulation pivot between the shell and drive head, the said shaft consisting of at least one cylindrical member and the outer ends (71, 72; 80a) of the shaft being forcibly retained in corresponding drillings (63, 64) provided opposite the said bore on the shell, characterised in that at least one of the said outer ends is knurled on its periphery and in that the end faces (71a, 72a; 80c) of the shaft are situated so as to be recessed or flush with the external surface of the shell (61a, 62a) bordering the said drillings.

2. Windscreen wiper device according to Claim 1, characterised in that the shaft consists of a single cylindrical member consisting of a cylindrical body having, at one outer axial end (72), a narrowing in diameter and, at the opposite outer axial end (71), a diameter greater than or equal to the diameter of the said cylindrical body.

3. Windscreen wiper device according to Claim 1, characterised in that the shaft consists of two cylindrical members (80), the said members having, at one outer axial end (80a), a broadening in diameter.

4. Windscreen wiper device according to any one of Claims 1 to 3, characterised in that recesses (79) are formed in the end faces and are suitable for receiving, in engagement, studs (91) of complementary shape, formed on the internal surface of a cap (90) which covers the drive head and the end (60a) of the shell pivoted thereon.

## Patentansprüche

1. Scheibenwischer, bestehend aus einem Befestigungsteil (50), der drehend um eine Antriebsachse (E) angetrieben werden kann, einem gehäuseartigen Gelenkteil (60), der mit einem Ende (60a) schwenkbar an dem besagten Befestigungsteil um eine Auslenkachse (D) gelagert ist, die sich quer zu der besagten Antriebsachse erstreckt, einem Wischblatthalter, der mit einem Ende in den gehäuseartigen Gelenkteil eingesetzt ist und mit dem gegenüberliegenden Ende ein Scheibenwischerblatt aufnehmen kann, das an die zu wischende Fläche angedrückt werden soll, wobei der Befestigungsteil eine Bohrung (52) enthält, in welche eine Spindel (70; 80) eingesetzt ist, die als Gelenkzapfen für die schwenkbare Lagerung zwischen dem gehäuseartigen Gelenkteil und dem Befestigungsteil dient, wobei die besagte Spindel aus wenigstens einem zylindrischen Element besteht und wobei die äußeren Enden (71, 72; 80a) der Spindel in entsprechenden Löchern (63, 64) gegenüber der besagten Bohrung am gehäuseartigen Gelenkteil eingedrückt gehalten werden, **dadurch gekennzeichnet,** daß wenigstens eines der besagten äußeren Enden an seinem Umfang gerändelt ist und daß die Abschlußflächen (71a, 72a; 80c) der Spindel zurückversetzt oder bündig zur Außenfläche des gehäuseartigen Gelenkteils (61a, 62a) angeordet sind, welche die besagten Löcher umgibt.

2. Scheibenwischer nach Anspruch 1 , **dadurch gekennzeichnet,** daß die Spindel aus einem einzigen zylindrischen Element besteht, das durch einen zylindrischen Körper gebildet wird, der an einem äußeren axialen Ende (72) einen verengten Durchmesser und an dem gegenüberliegenden äußeren axialen Ende (71) einen Durchmesser aufweist, der größer oder gleich dem Durchmesser des besagten zylindrischen Endes ist.

3. Scheibenwischer nach Anspruch 1 , **dadurch gekennzeichnet,** daß die Spindel aus zwei zylindrischen Elementen (80) besteht, wobei die besagten Elemente an einem äußeren axialen Ende (80a) einen verbreiterten Durchmesser aufweisen.

4. Scheibenwischer nach einem der Ansprüche 1 bis 3, **dadurch gekennzeichnet,** daß an den Abschlußflächen Aufnahmen (79) ausgebildet sind, in die formschlüssige Zapfen (91) eingesetzt werden können, die an der Innenfläche einer Abdeckung (90) ausgebildet sind, welche den Befestigungsteil und das daran schwenkbar gelagerte Ende (60a) des gehäuseartigen Gelenkteils abdeckt.
